# EUROPEAN PATENT APPLICATION

(11) **EP 3 534 320 A1**
(43) Date of publication of application: **04.09.2019**
(21) Application number: 17865831.6
(22) Date of filing: 30.06.2017
(51) Int. Cl.: G06Q 40/04

(54) **BLOCK CHAIN-BASED MULTI-CHAIN MANAGEMENT METHOD AND SYSTEM, ELECTRONIC DEVICE, AND STORAGE MEDIUM**

(30) Priority: 27.10.2016 CN 201610960022
(71) Applicant: One Connect Smart Technology Co., Ltd. (Shenzhen), Shenzhen, Guangdong (CN)
(72) Inventor: LU, Frank Yifan Chen, Shenzhen, Guangdong (CN); ZHANG, Zhenjie, Shenzhen, Guangdong (CN); YU, Zhe, Shenzhen, Guangdong (CN)
(74) Representative: de Arpe Fernandez, Manuel
(86) International application number: PCT/CN2017/091247
(87) International publication number: WO 2018/076759

(57) **Abstract**

The invention discloses a block chain-based multi-chain management method and system, an electronic device, and a storage medium. The block chain-based multi-chain management method comprises: constructing a virtual node for each mechanism node, the virtual node comprising node clusters generated based on block chains in which each mechanism node participates for processing different affairs and/or flows; constructing a block chain identity management module and a block chain transaction agent module for each constructed virtual node; connecting identity information of each mechanism node to a block chain identity management system corresponding to block chains in each virtual node by means of the block chain identity management module; and acquiring the identity information corresponding to each transaction by means of the block chain identity management module, packaging the acquired identity information and corresponding transaction parameters to generate packaging information, and sending the packaging information to a target block chain executing the corresponding transaction for transaction execution, by the block chain transaction agent module. Effective automated management on multiple block chain nodes is realized.

## Description

### Claim of Priority

On the basis of Paris Convention, this application claims the priority to Chinese Patent Application No. CN201610960022.1, filed on October 27, 2016 and entitled "Block chain-based Multi-chain Management Method and System", the content of which is incorporated herein by reference in its entirety.

### Technical Field

The invention relates to the technical field of block chains, and in particular to a block chain-based multi-chain management method and system, an electronic device, and a storage medium.

### Background Art

In a block chain ecological system, an increasingly inevitable problem is that there are more and more block chain networks. The existence of a multi-chain environment is mainly attributed to several factors: 1) nodes of many block chains are only limited to a participant of an affair or a flow, such as a supply chain; the question is that many institutions have many service chains in one service scene and a large institution will even have multiple service chains; as a result, a lot of scattered block chain networks difficult to be managed uniformly are generated by one company unconsciously; and 2) the demand on a second flow of a block chain in itself is very high, so some block chain will distribute daily transactions to multiple block chains by adopting a data fragmentation manner for operation, which also results in the difficulty in management.

At present, there hasn't been any real solution that may effectively solve the problems of the multi-chain environment. Now, a user needs to manage multiple block chain nodes herself/himself. If each block chain has an own identity verification mechanism, the user further needs to store and back up an own identity on each chain and thus the operation is cumbersome, errors are more likely to occur in data and the system efficiency turns out to be low.

### Summary of the Invention

It's a major object of the present to provide a block chain-based multi-chain management method and system, an electronic device and a storage medium, which aims to perform effective automated management on multiple block chain nodes of a same mechanism node.

A first aspect of the present invention provides a block chain-based multi-chain management method, comprising the steps of:
constructing a virtual node for each mechanism node, the virtual node comprising node clusters generated based on block chains in which each mechanism node participates for processing different affairs and/or flows;
constructing a block chain identity management module and a block chain transaction agent module for each constructed virtual node;
connecting identity information of each mechanism node to a block chain identity management system corresponding to the block chains in each virtual node by means of the block chain identity management module;
and acquiring the identity information corresponding to each transaction by means of the block chain identity management module, packaging the acquired identity information and corresponding transaction parameters to generate packaging information, and sending the packaging information to a target block chain executing the corresponding transaction for transaction execution, by the block chain transaction agent module.

A second aspect of the present invention provides a block chain center control system for multi-chain management, the block chain center control system comprising:
a constructing module, the constructing module configured for constructing a virtual node for each mechanism node, and the virtual node comprising node clusters generated based on block chains in which each mechanism node participates for processing different affairs and/or flows;
a block chain identity management module, the block chain identity management module configured for connecting identity information of each mechanism node to a block chain identity management system corresponding to the block chains in each virtual node; and
a block chain transaction agent module, the block chain transaction agent module configured for acquiring the identity information corresponding to each transaction by means of the block chain identity management module, packaging the acquired identity information and corresponding transaction parameters to generate packaging information, and sending the packaging information to a target block chain executing the corresponding transaction for transaction execution.

A third aspect of the present invention provides an electronic device, comprising processing equipment, storage equipment and a block chain center control system, wherein the block chain center control system is stored in the storage equipment, and comprises at least one computer readable instruction, and the at least one computer readable instruction may be executed by the processing equipment to achieve the operation of:
constructing a virtual node for each mechanism node, the virtual node comprising node clusters generated based on block chains in which each mechanism node participates for processing different affairs and/or flows;
constructing a block chain identity management module and a block chain transaction agent module for each constructed virtual node;
connecting identity information of each mechanism node to a block chain identity management system corresponding to the block chains in each virtual node by means of the block chain identity management module; and
acquiring the identity information corresponding to each transaction by means of the block chain identity management module, packaging the acquired identity information and corresponding transaction parameters to generate packaging information, and sending the packaging information to a target block chain executing the corresponding transaction for transaction execution, by the block chain transaction agent module.

A fourth aspect of the present invention provides a computer readable storage medium, in which at least one computer readable instruction which may be executed by processing equipment to achieve the operation of:
constructing a virtual node for each mechanism node, the virtual node comprising node clusters generated based on block chains in which each mechanism node participates for processing different affairs and/or flows;
constructing a block chain identity management module and a block chain transaction agent module for each constructed virtual node;
connecting identity information of each mechanism node to a block chain identity management system corresponding to the block chains in each virtual node by means of the block chain identity management module; and
acquiring the identity information corresponding to each transaction by means of the block chain identity management module, packaging the acquired identity information and corresponding transaction parameters to generate packaging information, and sending the packaging information to a target block chain executing the corresponding transaction for transaction execution, by the block chain transaction agent module.

According to the block chain-based multi-chain management method and system, the electronic device, and the storage medium which are provided by the present invention, a virtual node for each mechanism node is constructed by connecting the node clusters generated based on the block chains in which each mechanism node participates for processing different affairs and/or flows, and the block chain identity management module for managing identity information of the mechanism node and the block chain transaction agent module for managing transaction affairs of the mechanism node are constructed for each constructed virtual node, so that multi-chain management is performed based on the block chain identity management modules and the block chain transaction agent modules. Since each virtual node is constructed after nodes of one mechanism node in multiple block chain networks are connected, comprehensive management can be performed on the identity information, transaction information and the like of the mechanism node in multiple block chain networks based on the virtual node, the user does not need to carry out complicated operation such as one-by-one storage and back-up of an own identity on multiple block chain networks, and effective automated management on multiple block chain nodes is realized.

### Brief Description of the Drawings

Fig. 1 is an application environment schematic diagram of a preferred embodiment of a block chain-based multi-chain management method;
Fig. 2 is a flow chart of one embodiment of the block chain-based multi-chain management method;
Fig. 3 is a schematic diagram of a virtual node constructed in one embodiment of the block chain-based multi-chain management method;
Fig. 4 is a schematic diagram of transaction in one embodiment of the block chain-based multi-chain management method; and
Fig. 5 is a schematic functional block diagram of one embodiment of a block chain center control system.

Realization of objects, function features and advantages of the present invention will be further described in embodiments with reference to the accompanying drawings.

### Detailed Description of the Embodiments

The invention is further described in details below in conjunction with the accompanying drawings to have a clearer and better understanding of the technical problems to be solved by, and the technical scheme and benefits of the present invention. It shall be understood that the specific embodiments described herein are provided by way of explanation only but not limitation of the present invention.

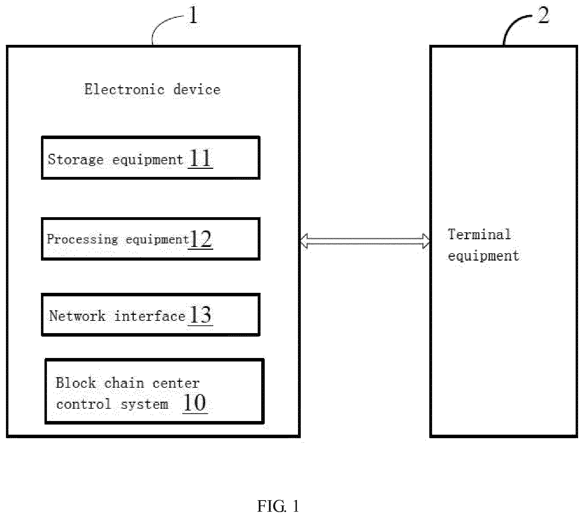

With reference to Fig. 1, which is an application environment schematic diagram of a preferred embodiment of a block chain-based multi-chain management method, the application environment schematic diagram includes an electronic device 1 and terminal equipment 2. The electronic device 1 may conduct data exchange with the terminal equipment 2 through a network and suitable technologies such as a near field communications technology.

The terminal equipment 2 comprises, but not limited to, any electronic product (for example, a personal computer, a tablet computer, a smart phone, a Personal Digital Assistant (PDA), a game console, an Internet Protocol Television (IPTV) and an intelligent wearable device) which may conduct man-machine interaction with a user through a keyboard, a mouse, a remote controller, a touch pad or voice-operated equipment.

The electronic device 1 is equipment capable of carrying out numerical calculation and/or information processing according to an instruction set or stored in advance. The electronic device 1 may be a computer, a single network server, a server group consisting of multiple network servers, or a cloud consisting of a large number of hosts or network servers based on cloud computing, wherein cloud computing is one kind of distributed computing, which is a super virtual computer consisting of a group of loosely-coupled computer sets.

In the embodiment, the electronic device 1 comprises, but not limited to, storage equipment 11, processing equipment 12 and a network interface 13 which may be in intercommunication connection through a system bus. It is to be noted that Fig. 1 only shows the electronic device 1 having assemblies (11 to 13). However, it should be understood that it is not required to implement all the shown assemblies, and even more or less assemblies can be implemented alternately.

Wherein, the storage equipment 11 comprises a memory and at least one type of readable storage media. The memory provides a cache for running of the electronic device 1; and the readable storage medium may be a nonvolatile storage medium such as a flash memory, a hard disk, a multimedia card and a card type memory. In some embodiment, the readable storage medium may be an internal memory unit of the electronic device 1, for example, the hard disk of the electronic device 1. In other embodiments, the nonvolatile storage medium may also be an external storage device of the electronic device 1, for example, a plug-type hard disk, a Smart Media Card (SMC), a Secure Digital (SD) Card, a Flash Card and the like which are equipped on the electronic device 1. In the embodiment, the readable storage medium of the storage equipment 11 is generally configured for storing an operating system and various application software, for example, program codes of a block chain center control system 10 in one embodiment of the application, installed in the electronic device 1. In addition, the storage equipment 11 may also be configured for temporarily storing various data which has already been output or will be output.

The processing equipment 12 in some embodiments may comprise one or more microprocessors, a microcontroller, a digital processor, etc. The processing equipment 12 is generally configured for controlling the running of the electronic device 1, for example, executing data interaction with the terminal equipment 2 or control and processing related to communications. In the embodiment, the processing equipment 12 is configured for running program codes or processing data stored in the storage equipment 11, for example, running the block chain center control system 10 and the like.

The network interface 13 may comprise a wireless network interface or a wired network interface. The network interface 13 is generally configured for establishing communications connection between the electronic device 1 and other electronic equipment. In the embodiment, the network interface 13 is mainly configured for connecting the electronic device 1 with one or more terminal equipment 2, and establishing a data transmission channel and communications connection between the electronic device 1 and the one or more terminal equipment 2.

The block chain center control system 10 comprises at least one computer readable instruction stored in the storage equipment 11, wherein the at least one computer readable instruction may be executed by the processing equipment 12 so as to achieve image recognition methods of the embodiments of the application. As will be described, the at least one computer readable instruction may be divided into different logic modules according to functions realized by various parts of the at least one computer readable instruction.

In one embodiment, when being executed by the processing equipment 12, the block chain center control system 10 achieves the operation of: firstly, constructing a virtual node for each mechanism node and constructing a block chain identity management module and a block chain transaction agent module for each constructed virtual node; then, connecting identity information of each mechanism node to a block chain identity management system corresponding to block chains in each virtual node by means of the block chain identity management module; and acquiring identity information corresponding to each transaction by means of the block chain identity management module, packaging the acquired identity information and corresponding transaction parameters to generate packaging information, sending the packaging information to a target block chain executing the corresponding transaction for transaction execution, and sending transaction related information and a transaction result to the terminal equipment 2 to be displayed to a terminal user, by the block chain transaction agent module.

In one embodiment, the block chain center control system 10 is stored in the storage equipment 11 and comprises at least one computer readable instruction stored in the storage equipment 11, wherein the at least one computer readable instruction may be executed by the processing equipment 12 so as to achieve image recognition methods of the embodiments of the application. As will be described, the at least one computer readable instruction may be divided into different logic modules according to functions realized by various parts of the at least one computer readable instruction.

The invention provides a block chain-based multi-chain management method.

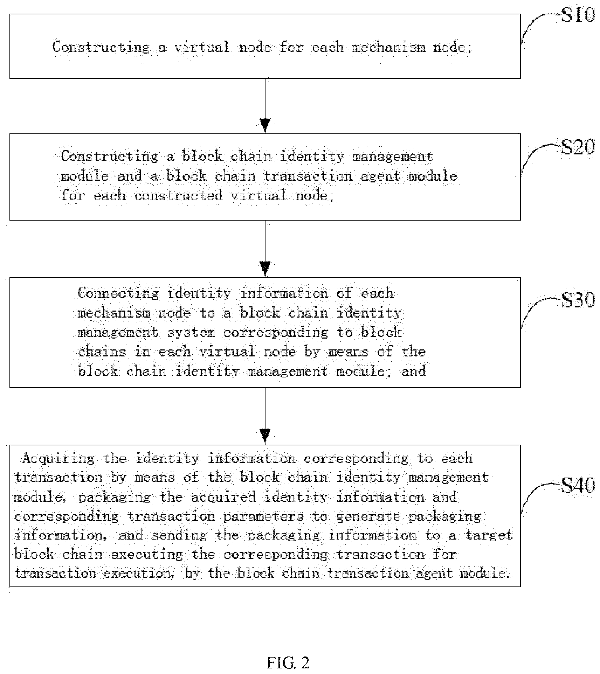

Refer to Fig. 2, which is a flow chart of one embodiment of the block chain-based multi-chain management method.

In one embodiment, the block chain-based multi-chain management method comprises:
S10, constructing a virtual node for each mechanism node, the virtual node comprising node clusters generated based on block chains in which each mechanism node participates for processing different affairs and/or flows;
   many institutions have many service chains in one service scene and a large institution will even have multiple service chains, therefore, a same mechanism node exits in multiple block chain networks for processing different affairs or flows. In the embodiment, each virtual node is formed by connecting nodes of one mechanism node in multiple block chain networks in a virtual node constructing manner. Wherein each virtual node comprises node clusters generated based on block chains in which each mechanism node participates for processing different affairs and/or flows; For example, in one embodiment, the node clusters under the virtual node may be divided into two types: one type is multiple chain nodes of a same mechanism node in an application scene, which are formed in a fragmentation manner for solving the flow problem, wherein the node clusters are grouped in the same type due to the fact that the node clusters belong to the same application scene and have identical nodes in all chains, and the node clusters in such type feature by belonging to the same identity management system (which is not controlled by the nodes); and the other type of node clusters is multiple chain nodes of block chain networks for supporting some affairs or flows, wherein the node clusters in such type feature that nodes of each chain are different (participants are different), so that the node clusters are likely to be supported by multiple identity management systems and are also probably realized by different block chain technologies;
S20, constructing a block chain identity management module and a block chain transaction agent module for each constructed virtual node;
S30, connecting identity information of each mechanism node to a block chain identity management system corresponding to block chains in each virtual node by means of the block chain identity management module; and
S40, acquiring the identity information corresponding to each transaction by means of the block chain identity management module, packaging the acquired identity information and corresponding transaction parameters to generate packaging information, and sending the packaging information to a target block chain executing the corresponding transaction for transaction execution, by the block chain transaction agent module.

The block chain identity management module and the block chain transaction agent module are constructed for each constructed virtual node; the block chain identity management module is configured for connecting identity information, such as a user name and an account number, of each mechanism node to the block chain identity management system corresponding to different block chains in each virtual node in a one-to-many manner; and the block chain identity management module manages calling, verification and the like on the identity information of each mechanism node in different block chains in each virtual node. The block chain transaction agent module is configured for acquiring identity information corresponding to each transaction by means of the block chain identity management module corresponding to each virtual node, packaging the acquired identity information and corresponding transaction parameters to generate packaging information, and sending the generated packaging information to a target block chain executing the corresponding transaction for transaction execution. Thus, during transaction execution, the functions of calling and verifying the identity information corresponding to the transaction based on the block chain identity management module corresponding to each virtual node are achieved, and a transaction execution process is monitored based on the block chain transaction agent module corresponding to each virtual node.

In the embodiment, one virtual node is constructed for each mechanism node by connecting the node clusters generated based on block chains in which each mechanism node participates for processing different affairs and/or flows, and the block chain identity management module for managing the identity information of each mechanism node and the block chain transaction agent module for managing transaction affairs of each mechanism node are constructed for each virtual node, so that multi-chain management is performed based on the block chain identity management modules and the block chain transaction agent modules. Since each virtual node is constructed and formed after nodes of one mechanism node in multiple block chain networks are connected, comprehensive management can be performed on the identity information, transaction information and the like of the mechanism node in the multiple block chain networks based on the virtual node, the user does not need to carry out complicated operation such as one-by-one storage and back-up of an own identity on the multiple block chain networks, and effective automated management on multiple block chain nodes is realized.

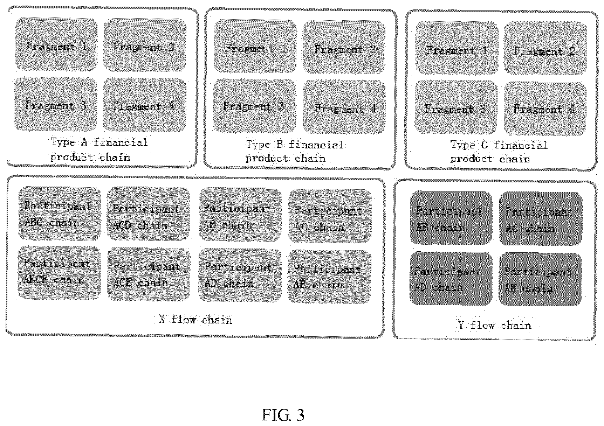

Furthermore, refer to Fig. 3, which is a schematic diagram of a virtual node constructed in one embodiment of the block chain-based multi-chain management method. In other embodiments, the step S10 above may comprise:
constructing a virtual node comprising a first type of node clusters for each mechanism node, wherein the first type of node clusters is generated based on a corresponding first type of block chain groups in which each mechanism node participates for processing different affairs in a fragmentation manner.
constructing a virtual node comprising the first type of node clusters for each mechanism node, wherein the first type of node clusters is generated based on a corresponding first type of block chain groups in which each mechanism node participates for processing different affairs in a fragmentation manner. For example, as shown in Fig. 3, the first type of block chain groups in which one mechanism node participates comprises a Type A financial product chain, a Type B financial product chain and a Type C financial product chain, wherein the Type A financial product chain is divided into 4 first small chains, namely a fragment 1, a fragment 2, a fragment 3 and a fragment 4; and the Type B financial product chain and the Type C financial product chain each are also divided into 4 first small chains, namely a fragment 1, a fragment 2, a fragment 3 and a fragment 4, wherein nodes of a mechanism exist in the first small chains.

Furthermore, in other embodiments, the step S10 above may also comprise:
constructing a second type of node clusters for each virtual node virtual node, wherein the second type of node clusters is generated based on a corresponding second type of block chain groups in which each mechanism node participates for processing different flows in a participant manner.
constructing a virtual node comprising the second type of node clusters for each mechanism node, wherein the second type of node clusters is generated based on the corresponding second type of block chain groups in which each mechanism node participates for processing different flows in a participant manner. For example, as shown in Fig. 3, the second type of block chain groups in which each mechanism node participates comprises an X flow chain and a Y flow chain, wherein the X flow chain is divided into 8 second small chains, namely a participant ABC chain, a participant ACD chain, a participant ABCE chain, a participant ACE chain, a participant AB chain, a participant AC chain, a participant AD chain and a participant AE chain; and the Y flow chain is divided into 4 second small chains, namely a participant AB chain, a participant AC chain, a participant AD chain and a participant AE chain, wherein nodes of the mechanism exists in the small chains of each flow chain of the second type of block chain groups.

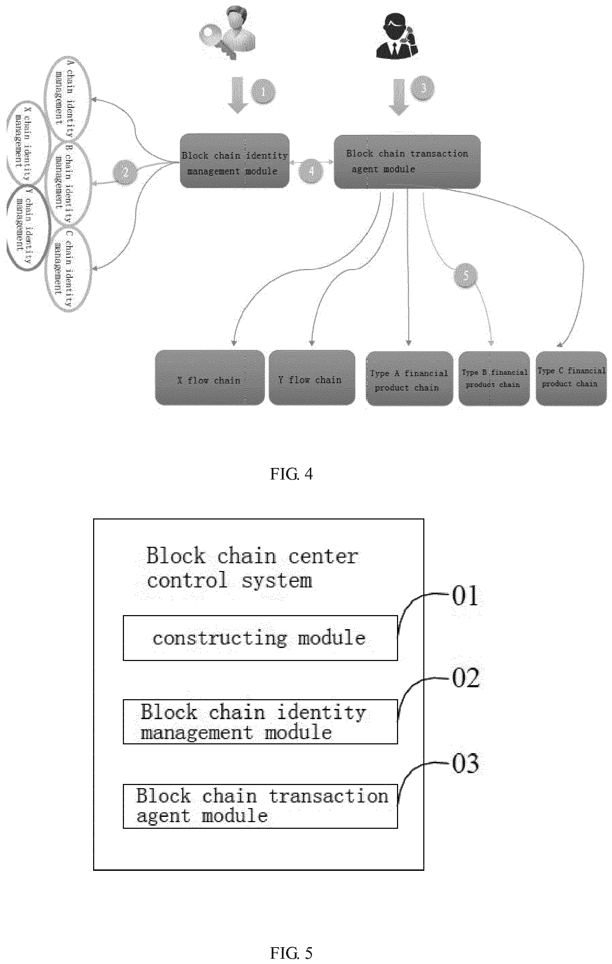

Furthermore, refer to in Fig. 4, which is a transaction schematic diagram of one embodiment of the block chain-based multi-chain management method; in other embodiments, further comprising:
constructing a corresponding block chain identity management module and a block chain transaction agent module for each constructed virtual node, wherein the block chain identity management module is configured for connecting identity information, such as a user name and an account number, of each mechanism node to block chain identity management systems corresponding to the first type of block chain groups and the second type of block chain groups in a one-to-many manner. As shown in Fig. 3, the block chain identity management system corresponding to the Type A financial product chain is "A-chain identity management", the block chain identity management system corresponding to the Type B financial product chain is "B-chain identity management", the block chain identity management system corresponding to the X flow chain is "X flow chain identity management", and so forth. After one mechanism node initiates a transaction request in a block chain such as the Type A financial product chain, the Type B financial product chain and the X flow chain, the block chain transaction agent module corresponding to the block chain acquires identity information corresponding to each transaction through the block chain identity management module corresponding to the block chain, packages the acquired identity information and corresponding transaction parameters to generate packaging information, and sending the generated packaging information to a target block chain executing the corresponding transaction for transaction execution. Thus, comprehensive, effective automated management on the identity information and transaction information of the mechanism node in multiple block chain networks is realized based on the virtual node.

Furthermore, in other embodiments, further comprising:
sending a transaction request to a block chain transaction agent module corresponding to a block chain after a mechanism initiates a transaction request with transaction parameters to the block chain by the mechanism, and finding out a block chain identity management system corresponding to the block chain through the block chain identity management module and acquiring node parameters and a transaction digital certificate required for executing the transaction request from the found block chain identity management system by the block chain transaction agent module;
and packaging the acquired node parameters and transaction digital certificate and the identity information together to generate packaging information and sending the packaging information to the block chain for transaction execution, by the block chain transaction agent module.

In the embodiment, after the mechanism node initiates the transaction request with the transaction parameters in one block chain in the constructed virtual node, the block chain transaction agent module corresponding to the block chain finds out the block chain identity management system corresponding to the block chain by means of the block chain identity management module corresponding to the block chain, acquires the node parameters and the transaction digital certificate required for executing the transaction request from the found block chain identity management system, packages the acquired node parameters and transaction digital certificate and the transaction parameters together to generate packaging information, and sends the packaging information to the block chain for transaction execution, so that effective automated management on the transaction of the mechanism node in multiple block chain networks is realized based on the virtual node.

The invention further provides a block chain center control system for multi-chain management.

Refer to Fig. 5, which is a schematic functional block diagram of one embodiment of the block chain center control system.

In one embodiment, the block chain center control system comprises a constructing module 01, a block chain identity management module 02, and a block chain transaction agent module 03, wherein:
the constructing module 01 is configured for constructing a virtual node for each mechanism node, each virtual node comprising node clusters generated based on block chains in which each mechanism node participates for processing different affairs and/or flows;
and many institutions have many service chains in one service scene and a large institution will even have multiple service chains, therefore, the same mechanism node usually exits in multiple block chain networks for processing different affairs or flows. In the embodiment, each virtual node is constructed and formed by connecting nodes of one mechanism node in multiple block chain networks, wherein each virtual node comprises node clusters generated based on block chains in which each mechanism node participates for processing different affairs and/or flows. For example, in one embodiment, the node clusters under the virtual node may be divided into two types: one type is multiple chain nodes of a same mechanism node in an application scene, which are formed in a fragmentation manner for solving the flow problem, wherein the node clusters are grouped in the same type due to the fact that the node clusters belong to the same application scene and have identical nodes in all chains, and the node clusters in such type feature by belonging to the same identity management system (which is not controlled by the nodes); and the other type of node clusters is multiple chain nodes of block chain networks for supporting some affairs or flows, wherein the node clusters in such type feature that nodes of each chain are different (participants are different), so that the node clusters are likely to be supported by multiple identity management systems and are also probably be realized by different block chain technologies;
the constructing module 01 also constructs a block chain identity management module 02 and a block chain transaction agent module 03 for each constructed virtual node; wherein the block chain identity management module 02 is configured for connecting identity information of each mechanism node to the block chain identity management system corresponding to block chains in each virtual node; and the block chain transaction agent module 03 is configured for acquiring the identity information corresponding to each transaction by means of the block chain identity management module, packaging the acquired identity information and corresponding transaction parameters to generate packaging information, and sending the packaging information to a target block chain executing the corresponding transaction for transaction execution.

The block chain identity management module and the block chain transaction agent module are constructed for each constructed virtual node; the block chain identity management module is configured for connecting identity information, such as a user name and an account number, of each mechanism node to a block chain identity management system corresponding to different block chains in each virtual node in a one-to-many manner; and the block chain identity management module manages calling, verification and the like on the identity information of each mechanism node in different block chains in each virtual node. The block chain transaction agent module is configured for acquiring the identity information corresponding to each transaction by means of the block chain identity management module corresponding to each virtual node, packaging the acquired identity information and corresponding transaction parameters to generate packaging information, and sending the generated packaging information to a target block chain executing the corresponding transaction for transaction execution. Thus, during transaction execution, the functions of calling and verifying the identity information corresponding to the transaction based on the block chain identity management module corresponding to each virtual node are achieved, and a transaction execution process is monitored based on the block chain transaction agent module corresponding to each virtual node.

In the embodiment, one virtual node is constructed for each mechanism node by connecting the node clusters generated based on the block chains in which each mechanism node participates for processing different affairs and/or flows, and the block chain identity management module for managing identity information of each mechanism node and the block chain transaction agent module for managing transaction affairs of each mechanism node are constructed for each virtual node, so that multi-chain management is carried out based on the block chain identity management module and the block chain transaction agent module. Since each virtual node is constructed after nodes of one mechanism node in multiple block chain networks are connected, comprehensive management can be performed on the identity information, transaction information and the like of the mechanism node in multiple block chain networks based on the virtual node, the user does not need to carry out complicated operation such as one-by-one storage and back-up of an own identity on multiple block chain networks, and effective automated management on multiple block chain nodes is realized.

Furthermore, in other embodiments, the constructing module 01 may also be configured for:
constructing a virtual node comprising the first type of node clusters for each mechanism node, wherein the first type of node clusters is generated based on the corresponding first type of block chain groups in which each mechanism node participates for processing different affairs in a fragmentation manner.
constructing a virtual node comprising the first type of node clusters for each mechanism node, wherein the first type of node clusters is generated based on the corresponding first type of block chain groups in which each mechanism node participates for processing different affairs in a fragmentation manner. For example, the first type of block chain groups in which each mechanism node participates comprises a Type A financial product chain, a Type B financial product chain and a Type C financial product chain, wherein the Type A financial product chain is divided into 4 first small chains, namely a fragment 1, a fragment 2, a fragment 3 and a fragment 4; and the Type B financial product chain and the Type C financial product chain are also divided into 4 first small chains, namely a fragment 1, a fragment 2, a fragment 3 and a fragment 4, wherein nodes of the mechanism exist in the first small chains.

Furthermore, in other embodiments, the constructing module 01 may also be configured for:
constructing a second type of node clusters for each virtual node virtual node, wherein the second type of node clusters is generated based on a corresponding second type of block chain groups in which each mechanism node participates for processing different flows in a participant manner;
constructing a virtual node comprising the second type of node clusters for each mechanism node, wherein the second type of node clusters is generated based on the corresponding second type of block chain groups in which each mechanism node participates for processing different flows in a participant manner. For example, the second type of block chain groups in which each mechanism node participates comprises an X flow chain and a Y flow chain, wherein the X flow chain is divided into 8 second small chains, namely a participant ABC chain, a participant ACD chain, a participant ABCE chain, a participant ACE chain, a participant AB chain, a participant AC chain, a participant AD chain and a participant AE chain; and the Y flow chain is divided into 4 second small chains, namely a participant AB chain, a participant AC chain, a participant AD chain and a participant AE chain, wherein nodes of the mechanism exists in the small chains of each flow chain of the second type of block chain groups.

Furthermore, in other embodiments, the constructing module 01 may also be configured for:
constructing a corresponding block chain identity management module and a block chain transaction agent module for each constructed virtual node, wherein the block chain identity management module is configured for connecting identity information, such as a user name and an account number, of each mechanism node to block chain identity management systems corresponding to the first type of block chain groups and the second type of block chain groups in a one-to-many manner. For example, the block chain identity management system corresponding to the Type A financial product chain is "A-chain identity management", the block chain identity management system corresponding to the Type B financial product chain is "B-chain identity management", the block chain identity management system corresponding to the X flow chain is "X flow chain identity management", and so forth. After a mechanism node initiates a transaction request in a block chain such as the Type A financial product chain, the Type B financial product chain and the X flow chain, the block chain transaction agent module corresponding to the block chain acquires identity information corresponding to each transaction through the block chain identity management module corresponding to the block chain, packages the acquired identity information and corresponding transaction parameters to generate packaging information, and sending the generated packaging information to a target block chain executing the corresponding transaction for transaction execution. Thus, comprehensive, effective automated management on the transaction of the mechanism node in multiple block chain networks is realized based on the virtual node.

Furthermore, in other embodiments, the block chain transaction agent module 03 may also be configured for:
finding out a block chain identity management system corresponding to a block chain through the corresponding block chain identity management module after a mechanism initiates a transaction request with transaction parameters to the block chain, and acquiring node parameters and a transaction digital certificate required for executing the transaction request from the found block chain identity management system;
and packaging the acquired node parameters and transaction digital certificate and the transaction parameters together to generate packaging information, and sending the packaging information to the block chain for transaction execution.

In the embodiment, after the mechanism nodes initiates the transaction request with the transaction parameters to one block chain in the constructed virtual node, the block chain transaction agent module corresponding to the block chain finds out the block chain identity management system corresponding to the block chain through the block chain identity management module corresponding to the block chain, acquires the node parameters and the transaction digital certificate required for executing the transaction request from the found block chain identity management system, packages the acquired node parameters and transaction digital certificate and the transaction parameters together to generate packaging information, and sends the packaging information to the block chain for transaction execution. Thus, comprehensive, effective automated management on the transaction of the mechanism node in multiple block chain networks is realized based on the virtual node.

In addition, the invention provides a computer readable storage medium. A block chain center control system is stored in the computer readable storage medium; the block chain center control system may be executed by at least one processing equipment so that the at least one processing equipment executes the steps of the block chain-based multi-chain management method as described above; and specific implementation processes of S10, S20 and S30 of the block chain-based multi-chain management method are as described above and a redundant description will not be provided.

It is noted that the terms "comprising", "having" or any other variations herein are intended to cover non-exclusive inclusion, so that a process, method, article, or device that comprises a list of elements is not necessarily limited to only those elements but may include other elements not expressly listed or inherent to such process, method, article, or device. In the absence of more specific situations, an element defined by the statement "comprising a" does not exclude any other identical elements existing in the process, method, article, or device comprising the element.

Through the embodiments described above, those skilled in the art may understand clearly that the method in the embodiments described above may be realized by virtue of software and a necessary general hardware platform, and also by hardware, while the former is better in many conditions. Based on such understanding, the technical scheme essentially, or the part contributing to the prior art of the present invention may be reflected in a software product. The computer software product may be stored in a storage medium (such as ROM/RAM, a diskette and an optical disk), and comprises a plurality of instructions used to allow terminal equipment (which may be a cell phone, a computer, a server, an air conditioner, or a network appliance, etc.) to execute the methods described in the embodiments of the present invention.

The accompanying drawings described above explain the preferred embodiments of the present invention, and don't limit the scope of the claims of the present invention on such basis. The embodiments described above are the exemplary embodiments and don't represent quality of the embodiments. In addition, although a logical order is shown in the flow chart, in some situations, the illustrated or described steps may be executed in an order different from that herein.

It will be understood by those skilled in the art that without departing from the scope and spirit of the present invention, the present invention may be realized in various variations, for example, the characteristics of one embodiment can be used in the other embodiment and thus another embodiment is obtained. Any modifications, equivalents, alternatives and improvements made within the technical concept of the present invention shall all fall into the scope of the claims of the present invention.

## Claims

1. A block chain-based multi-chain management method, comprising the steps of:
constructing a virtual node for each mechanism node, the virtual nodes comprising node clusters generated based on block chains in which each mechanism node participates for processing different affairs and/or flows;
constructing a block chain identity management module and a block chain transaction agent module for each constructed virtual node;
connecting identity information of each mechanism node to a block chain identity management system corresponding to block chains in each virtual node by means of block chain identity management module;
and acquiring the identity information corresponding to each transaction by means of the block chain identity management module, packaging the acquired identity information and corresponding transaction parameters to generate packaging information, and sending the packaging information to a target block chain executing the corresponding transaction for transaction execution, by the block chain transaction agent module.

2. The block chain-based multi-chain management method of claim 1, wherein the block chain-based multi-chain management method further comprises:
sending a transaction request to a corresponding block chain transaction agent module, by means of a mechanism, after the mechanism initiates the transaction request with transaction parameters to a block chain;
finding out a block chain identity management system corresponding to the block chain by means of the corresponding block chain identity management module and acquiring node parameters and a transaction digital certificate required for executing the transaction request from the found block chain identity management system, by the block chain transaction agent module; and
packaging the acquired node parameters and transaction digital certificate and the transaction parameters together to generate packaging information and sending the packaging information to the block chain for transaction execution, by the block chain transaction agent module.

3. The block chain-based multi-chain management method of claims 1 or 2, wherein the steps for constructing one virtual node for each mechanism node comprise:
constructing one virtual node comprising a first type of node clusters for each mechanism node, wherein the first type of node clusters is generated based on a corresponding first type of block chain groups in which each mechanism node participates for processing different affairs in a fragmentation manner.

4. The block chain-based multi-chain management method of claim 3, wherein the step for constructing one virtual node for each mechanism node further comprise:
constructing a second type of node clusters for each virtual node, wherein the second type of node clusters is generated based on a corresponding second type of block chain groups in which each mechanism node participates for processing different flows in a participant manner;

5. The block chain-based multi-chain management method of claims 1 or 2, wherein the step of connecting identity information of each mechanism node to the block chain identity management system corresponding to the block chain in each virtual node by the block chain identity management module comprises:
connecting a user name of each mechanism node to a block chain identity management system corresponding to block chains in each virtual node in a one-to-many manner through the block chain identity management module.

6. A block chain center control system for multi-chain management, comprising:
a constructing module, wherein the constructing module is configured for constructing a virtual node for each mechanism node, and the virtual node comprises node clusters generated based on block chains in which each mechanism node participates for processing different affairs and/or flows;
a block chain identity management module, the block chain identity management module configured for connecting identity information of each mechanism node to a block chain identity management system corresponding to the block chains in each virtual node; and
a block chain transaction agent module, the block chain transaction agent module configured for acquiring the identity information corresponding to each transaction by means of the block chain identity management module, packaging the acquired identity information and corresponding transaction parameters to generate packaging information, and sending the packaging information to a target block chain executing the corresponding transaction for transaction execution.

7. The block chain center control system of claim 6, wherein the block chain transaction agent module is also configured for:
finding out a block chain identity management system corresponding to a block chain through the corresponding block chain identity management module after a mechanism initiates a transaction request with transaction parameters to the block chain;
acquiring node parameters and a transaction digital certificate required for executing the transaction request from the found block chain identity management system; and
packaging the acquired node parameters and transaction digital certificate and the transaction parameters together to generate packaging information and sending the packaging information to the block chain for transaction execution.

8. The block chain center control system of claims 6 or 7, wherein the constructing module is also configured for:
constructing one virtual node comprising a first type of node clusters for each mechanism node, wherein the first type of node clusters is generated based on a corresponding first type of block chain groups in which each mechanism node participates for processing different affairs in a fragmentation manner.

9. The block chain center control system of claim 8, wherein the constructing module is also configured for:
constructing a second type of node clusters for each virtual node, wherein the second type of node clusters is generated based on a corresponding second type of block chain groups in which each mechanism node participates for processing different flows in a participant manner.

10. The block chain center control system of claims 6 or 7, wherein the block chain identity management module is also configured for:
connecting the user name of each mechanism node to a block chain identity management system corresponding to block chains in each virtual node in a one-to-many manner through the block chain identity management module.

11. An electronic device, comprising processing equipment, storage equipment and a block chain center control system; wherein the block chain center control system is stored in the storage equipment, and comprises at least one computer readable instruction; and the at least one computer readable instruction may be executed by the processing equipment to achieve the operation of:
constructing a virtual node for each mechanism node, wherein the virtual node comprises node clusters generated based on block chains in which each mechanism node participates for processing different affairs and/or flows;
constructing a block chain identity management module and a block chain transaction agent module for each constructed virtual node;
connecting identity information of each mechanism node to a block chain identity management system corresponding to the block chains in each virtual node in a one-to-many manner; and
acquiring the identity information corresponding to each transaction by means of the block chain identity management module, packaging the acquired identity information and corresponding transaction parameters to generate packaging information, and sending the packaging information to a target block chain executing the corresponding transaction for transaction execution, by the block chain transaction agent module.

12. The electronic device of claim 11, wherein the at least one computer readable instruction may be executed by the processing equipment to achieve the operation of:
sending a transaction request to a corresponding block chain transaction agent module, by means of a mechanism, after the mechanism initiates the transaction request with transaction parameters to a block chain;
finding out a block chain identity management system corresponding to the block chain through the corresponding block chain identity management module, and acquiring node parameters and a transaction digital certificate required for executing the transaction request from the found block chain identity management system, by the block chain transaction agent module;
and packaging the acquired node parameters and transaction digital certificate and the transaction parameters together to generate packaging information and sending the packaging information to the block chain for transaction execution, by the block chain transaction agent module.

13. The electronic device of claims 11 or 12, wherein the step of constructing a virtual node for each mechanism node comprises:
constructing a virtual node comprising a first type of node clusters for each mechanism node, wherein the first type of node clusters is generated based on the corresponding first type of block chain groups in which each mechanism node participates for processing different affairs in a fragmentation manner.

14. The electronic device of claim 13, wherein the step of constructing one virtual node for each mechanism node further comprises:
constructing a second type of node clusters for each virtual node, wherein the second type of node clusters is generated based on a corresponding second type of block chain groups in which each mechanism node participates for processing different flows in a participant manner.

15. The electronic device of claims 11 or 12, wherein the step of connecting identity information of each mechanism node to the block chain identity management system corresponding to the block chain in each virtual node by means of block chain identity management module comprises:
connecting a user name of each mechanism node to a block chain identity management system corresponding to block chains in each virtual node in a one-to-many manner through the block chain identity management module.

16. A computer readable storage medium, wherein at least one computer readable instruction which may be executed by processing equipment is stored in the computer readable storage medium to achieve the operation of:
constructing a virtual node for each mechanism node, wherein the virtual node comprises node clusters generated based on block chains in which each mechanism node participates for processing different affairs and/or flows;
constructing a block chain identity management module and a block chain transaction agent module for each constructed virtual node;
connecting identity information of each mechanism node to a block chain identity management system corresponding to block chains in each virtual node through the block chain identity management module; and
acquiring the identity information corresponding to each transaction by means of the block chain identity management module, packaging the acquired identity information and corresponding transaction parameters to generate packaging information, and sending the packaging information to a target block chain executing the corresponding transaction for transaction execution, by the block chain transaction agent module.

17. The computer readable instruction of claim 16, wherein the at least one computer readable instruction may be executed by the processing equipment to achieve the operation of:
sending a transaction request to a corresponding block chain transaction agent module, by means of a mechanism, after the mechanism initiates the transaction request with transaction parameters to a block chain;
finding out a block chain identity management system corresponding to the block chain by means of the corresponding block chain identity management module and acquiring node parameters and a transaction digital certificate required for executing the transaction request from the found block chain identity management system, by the block chain transaction agent module; and
packaging the acquired node parameters and transaction digital certificate and the transaction parameters together to generate packaging information and sending the packaging information to the block chain for transaction execution, by the block chain transaction agent module.

18. The computer readable storage medium of claims 16 or 17, wherein the step of constructing a virtual node for each mechanism node comprises:
constructing one virtual node comprising a first type of node clusters for each mechanism node, wherein the first type of node clusters is generated based on the corresponding first type of block chain groups in which each mechanism node participates for processing different affairs in a fragmentation manner.

19. The computer readable storage medium of claim 18, wherein the step of constructing a virtual node for each mechanism node further comprises:
constructing a second type of node clusters for each virtual node, wherein the second type of node clusters is generated based on a corresponding second type of block chain groups in which each mechanism node participates for processing different flows in a participant manner.

20. The computer readable storage medium of claims 16 or 17, wherein the step of connecting identity information of each mechanism node to the block chain identity management system corresponding to the block chain in each virtual node by means of the block chain identity management module comprises:
connecting a user name of each mechanism node to a block chain identity management system corresponding to block chains in each virtual node in a one-to-many manner through the block chain identity management module.
